# EUROPÄISCHE PATENTSCHRIFT

(11) **EP 2 059 403 B1**
(45) Veröffentlichungstag und Bekanntmachung des Hinweises auf die Patenterteilung: **07.03.2018**
(21) Anmeldenummer: 07803074.9
(22) Anmeldetag: 30.08.2007
(51) Int. Cl.: B60J 5/06

(54) **SCHIEBETÜRSYSTEM FÜR EIN FAHRZEUG**
SLIDING DOOR SYSTEM FOR A VEHICLE
SYSTÈME DE PORTE COULISSANTE POUR UN VÉHICULE

(30) Priorität: 01.09.2006 DE 102006041082
(43) Veröffentlichungstag der Anmeldung: 20.05.2009
(73) Patentinhaber: Ford Global Technologies, LLC, Dearborn, MI 48126 (US)
(72) Erfinder: BENDEROTH, Thomas, 51647 Gummersbach (DE); KLEIN, Gerhard, 50259 Pulheim (DE)
(74) Vertreter: Dörfler, Thomas
(86) Internationale Anmeldenummer: PCT/EP2007/059065
(87) Internationale Veröffentlichungsnummer: WO 2008/025827

(56) Entgegenhaltungen:
- EP-A- 0 309 238
- EP-A- 1 745 958
- DE-A1- 10 350 441
- GB-A- 2 126 173
- GB-A- 2 321 269
- JP-A- 2004 135 245
- US-A- 4 984 385
- US-A- 5 398 988
- US-A- 5 606 771
- US-A1- 2006 049 667

## Beschreibung

Die Erfindung betrifft ein Schiebetürsystem für ein Kraftfahrzeug gemäß dem Oberbegriff des Anspruchs 1.

In der EP 0100455 ist ein Schiebetürensystem für ein Kraftfahrzeug offenbart, umfassend einen Rahmen in der Seitenwand des Kraftfahrzeuges, eine Türöffnung im Rahmen und zum Verschließen der Türöffnung eine Schwenktür und eine Schiebetür. Die Schwenktüre ist in Fahrtrichtung gesehen vorne an der A-Säule mit bekannten Scharniergelenken befestigt, Öffnen und Schließen der Türöffnung erfolgt durch eine Schwenkbewegung. Die Schiebetür ist - in Fahrtrichtung gesehen - hinter der Schwenktür angeordnet. Sie ist zum Öffnen und Schließen der Türöffnung über eine Führungseinrichtung mit Führungsschienen längs eines relativ zur Fahrzeugkarosserie nicht-linearen Weges in einer Schließrichtung aus einer Offenposition in eine Schließposition verfahrbar ist und in der Schließposition mittels einer Schließvorrichtung festlegbar. Zwischen Schwenktür und Schiebetür ist keine Karosseriesäule, hier wäre dies die B-Säule, vorhanden. Die Funktion der B-Säule bei dem gezeigten Türkonzept wird von den beiden Türen selber übernommen. Dies betrifft wesentlich die Abdichtung des Fahrzeuginnenraums im gemeinsamen Türspalt gegenüber der Umgebung und die strukturelle Integration der beiden Türen im Rahmen der Seitenwand.

Die strukturelle Integration wird üblicherweise durch die Schwenktür gewährleistet, indem an deren Hinterkante oben und unten geeignete Schließmittel vorhanden sind, die eine kraftschlüssige Verbindung mit dem oberen und unteren Längsrahmen gewährleisten. Schwieriger ist die strukturelle Integration für die Schiebetür. Insbesondere bei einem Seitenaufprall wirken auf die betroffenen Türen sehr hohe Kräfte. Um zu verhindern, dass die Schiebtür beim Seitenaufprall nicht ungewollt öffnet, ist eine kraftschlüssige Fixierung der Schiebetür im Rahmen der Seitenwand erforderlich. Da die Schiebetür auf ihrem Weg zur Schließposition hin über gekrümmte Enden der nichtlinearen Führungsschienen in die Karosserieebene hinein verfahren wird, ist diese kraftschlüssige Fixierung im Rahmen konstruktiv sehr aufwendig.

Aus der GB 2126173 A ist ein Kraftfahrzeug mit zwei entgegengesetzt schließenden Schiebetüren bekannt, bei dem zwischen den Schiebetüren keine Karosseriesäule angeordnet ist. Die hintere Schiebetür ist zum Öffnen und Schließen der Türöffnung über eine Führungseinrichtung mit Führungsschienen längs eines relativ zur Fahrzeugkarosserie nicht-linearen Weges in einer Schließrichtung aus einer Offenposition in eine Schließposition verfahrbar und in dieser Schließposition mittels einer Schließvorrichtung festlegbar. Durch den nicht-linearen Weg kurz vor Erreichen der Schließposition ist die Schiebetür schwierig kraftschlüssig in der Türöffnung fixierbar; vor allem bei einem Seitenaufprall kann die Tür leicht aus der Führung springen und die Türöffnung ganz oder teilweise freigeben.

US 2006/0049667 A1 beschreibt ein gattungsgemäßes Schiebetürsystem mit einer in radial und axial zur Schließrichtung wirksamen Verriegelungsvorrichtung, die ausschließlich feststehende Verriegelungselemente in Form von Steckaufnahme und Steckvorsprung aufweist, wobei diese zur Herstellung der Verriegelung exakt ineinander geführt werden müssen.
Gemäß US 5 606 771 A D2 und US 5 398 988 A ist jeweils eine Steck-KlemmVerbindung zwischen Schiebetür und Rahmen zur Dämpfung einer Relativbewegung zwischen denselben durch Aufnahme von Bewegungsenergie vorgesehen, welches jedoch nicht für eine für einen Aufprall notwendig feste Verriegelung der Schiebetür an dem Rahmen geeignet ist.

Bei anderen nicht gattungsgemäßen Schiebetürsystemen gemäß US 5 398 988 A und US 4 984 385 A sind kurze Führungszapfen vorgesehen, um hierüber die Schiebetür zu ihrer Verriegelung durch übliche Türschlösser in eine korrekte Schließposition zu bringen.

Der Erfindung liegt die Aufgabe zugrunde, ein Schiebetürsystem bereitzustellen, das konstruktiv unaufwändiger ist und mittels dessen die Schiebetür in seiner Schließposition kraftschlüssig fixierbar ist.

Die gestellte Aufgabe wird erfindungsgemäß dadurch gelöst, dass eine in Schließrichtung hintere Führungsschiene, in der die Schiebetür mit einem in Schließrichtung hinteren Endbereich verschiebbar gelagert ist, einen S-förmigen Verlauf mit einem in Schließrichtung hinteren Endabschnitt aufweist, der etwa parallel zur größeren Seitenfläche der Schiebetür in der Schließposition angeordnet ist, und dass ein Steckteil und/oder die entsprechende Steckaufnahme zur Justierung der Schließposition der Schiebetür einstellbar sind, indem die Steckaufnahme eine gegenüber der Fahrzeugkarosserie in verschiedenen Positionen festlegbaren Einsatz aufweist und/oder indem der Steckzapfen exzentrisch in einem Steckteil gelagert ist und zu Einstellungszwecken in einer bestimmten Exzenterposition festlegbar ist. Vorteilhafte Weiterbildungen des Schiebetürsystems werden in den Unteransprüchen beschrieben.

Hierbei wird unter "mit etwa parallel" eine positive oder negative Abweichung von wenigen Grad verstanden, so dass der hintere Endabschnitt mit einem geringen Weganteil zum Fahrzeuginneren hin oder mit einem geringen Weganteil nach Außen hin geführt ist. Bevorzugt ist jedoch eine zur größeren Seitenfläche der Schiebetür in der Schließposition parallele Ausrichtung des hinteren Endabschnittes. Der in Schließrichtung vorderen Endabschnitt kann eine übliche Ausbildung mit einer Ausrichtung parallel zur größeren Seitenfläche der Schiebetür in der Schließposition aufweisen, der beabstandet zum hinteren Endabschnitt angeordnet ist, wobei der vordere Endabschnitt der Teilabschnitt der hinteren und auch vorderen Führungsschiene ist, in dem die Schiebetür parallel beabstandet an der Karosserie vorbeigeführt wird. Gemäß dem S-förmigen Verlauf der hinteren Führungsschiene wird der hintere Endbereich der Schiebetür in einem die beiden Endabschnitte verbindenden Mittelteil mittels zweier aneinander anschließenden und entgegengesetzt gekrümmten Kurvenabschnitte geführt und dabei beim Schließen der Schiebetür bevorzugt soweit in Richtung zum Fahrzeuginneren verfahren, dass die
der Schiebetür bevorzugt soweit in Richtung zum Fahrzeuginneren verfahren, daß die Außenseite des Endbereiches in der Schließposition mit der übrigen, die Türöffnung aufweisenden Seitenfläche der Karosserie fluchtet.

Die vordere Führungsschiene, in der der in Schließrichtung vordere Endbereich der Schiebetür verfahrbar gelagert ist, kann eine übliche lineare oder nicht-lineare Ausbildung aufweisen. Bei der linearen Ausbildung kann der vordere Endbereich zum Schließen der Schiebetür über einen beweglichen Führungsarm zum Fahrzeuginneren hineingeführt werden. Bei einer nicht-linearen Ausbildung kann, wie in der EP 0 100 455 B1 beschrieben, auf die hier verwiesen wird, der in Schließrichtung hintere Abschnitt der vorderen Führungsschiene einen zum Fahrzeuginneren hin gekrümmten Verlauf ausweisen, durch den der vordere Endabschnitt entsprechend zum Fahrzeuginneren geführt und über den Schließmechanismus in dem Längsrahmen lösbar festgelegt wird. Der Schließmechanismus selbst kann ein üblicher Schließmechanismus für Schiebetüren oder für Autotüren mit einem Schnappschloß oder dergleichen sein. Mit dem Schließen der Schiebetür wird also der vordere Endbereich der Schiebetür mittels des Schließmechanismus festgelegt und der hintere Endbereich durch die Steifigkeiten der Schiebetür und der hinteren Führungsschiene in der Schließposition sicher gehalten, da der hintere Endabschnitt, in dem der hintere Endbereich der Schiebetür in der Schließposition gelagert ist, in Schließrichtung verläuft. Es können zusammenwirkende Anschläge vorgesehen sein, durch die ein Verfahrweg der Schiebetür in Schließrichtung mit Erreichen der Schließposition begrenzt wird und gegen die Schiebetür in der Schließposition anliegt.

Im Fahrzeugbau, insbesondere im Personenkraftfahrzeugbau, sind Schiebetüren in der Regel an Fahrzeugseiten parallel zur Fahrtrichtung oder x-Richtung des Fahrzeuges angeordnet und werden in Fahrtrichtung bei in Fahrtrichtung hinten angeordneten Schiebetüren und gegen Fahrtrichtung bei in Fahrtrichtung vorne angeordneten Schiebetüren geschlossen, so daß die größere Seitenfläche der Schiebetür parallel zur Seitenfläche der Karosserie verläuft und die Schiebetür in der Schließposition in der Karosserie integriert ist.

Vorzugsweise sind zwei hintere Führungsschienen vorgesehen, die sich längs der Schließrichtung erstrecken und von denen eine oberhalb und eine unterhalb der Türöffnung in oder an den Längsrahmen angeordnet sind. Da hiermit die Schiebetür in mindesten drei Punkten geführt und gehalten wird, ist eine stabilere Führung der Schiebetür sowie in ihrer Schließposition eine bessere Festlegung derselben möglich.

In einer bevorzugten Weiterbildung kann die Schließvorrichtung eine Verriegelungsvorrichtung zur Festlegung des hinteren Endbereiches der Schiebetür aufweisen, wobei die Verriegelungsvorrichtung ausschließlich feststehende Verriegelungselemente umfaßt. Durch die Verriegelungseinrichtung wird der hintere Endbereich der Schiebetür zusätzlich zu seiner Halterung in den hinteren Führungsschienen gehalten, wodurch eine höhere Sicherheit insbesondere bei einem Seitenaufprall erzielbar ist. Mit den feststehenden Verriegelungselementen wird eine konstruktiv einfache zusätzliche Festlegung der Schiebetür in der Schließposition vorgeschlagen. Die Verriegelungselemente sind mit Verfahren der Schiebetür in ihre Schließposition vorzugsweise ineinander führbar, so daß die Verriegelungselemente in der Schließposition der Schiebetür verriegelnd ineinander greifend angeordnet sind. Die Verriegelungselemente können beispielsweise auf halber Höhe endseitig an oder in der Schiebetür und in Schließposition gegenüberliegend und zusammenwirkend in oder am Rahmen angeordnet sein. Ist die Schiebetür zum Beispiel als hintere Schiebetür vorgesehen, so sind können Verriegelungselemente an der hinteren Vertikalenstrebe des Rahmens, z. B. der so genannten C-Säule, angeordnet sein.

In einer bevorzugten Ausführung wird die Schiebetür durch ein Verriegelungselement in horizontaler oder vertikaler Richtung festlegt. Damit kann ein Verspannen der Schiebetür in der Karosserieöffnung verhindert werden. Indem z. B. das Verriegelungselement eine vertikale Verschiebung zulässt, können die Führungsrollen nicht in der Führungsschienen verklemmen. Bei der Verwendung von zwei Verriegelungselementen oben und unten and der Schiebetür kann ein Verriegelungselement die Schiebetür nur horizontal festlegen, während das andere Führungselement die Schiebetür horizontal und vertikal festlegt. Dann ist die Schiebetür gegenüber der Außenkontur in horizontaler Richtung festgelegt, kann also nicht aus der Fahrzeugkontur herausragen. Vertikal dagegen ist die Schiebetür gegenüber der Fahrzeugkarosserie im Längsrahmen nur an einem Punkt festgelegt und kann am anderen Verriegelungspunkt sich frei (vertikal) bewegen, wodurch eine Verspannung der Schiebetür zwischen den Verriegelungselementen verhindert wird. Es ist auch möglich, ein Verriegelungselement für die vertikale und ein Verriegelungselement für die horizontale Festlegung der Schiebetür im Rahmen zu verwenden.

Besonders bevorzugt sind die Verriegelungselemente als in Schließrichtung ineinander steckbare Steckelemente für eine Steckverbindung ausgebildet sind, wobei die Steckelemente Steckaufnahme und Steckteil umfassen. Mittels der Steckverbindung mit ineinander gestecktem Steckteil und Steckaufnahme in der Schließposition ist die Schiebetür in einer Ebene senkrecht zur Schließrichtung kraftschlüssig festgelegt und mit Anschließen des vorderen Endbereiches an den Längsrahmen wird die Schiebetür und damit ihr hinterer Endbereich dank ihrer Steifigkeit in und entgegen der Schließrichtung verschiebungsfest in den hinteren Führungsschienen gehalten. Es versteht sich, daß stets die jeweils zugehörige Steckaufnahme oder das jeweils zugehörige Steckteil so in dem Längsrahmen positioniert ist, daß sie oder es zur Ausbildung der Steckverbindung in das entsprechende Steckteil oder die entsprechende Steckaufnahme eingreifen kann.

Vorteilhaft ist, wenn die Steckrichtung, mit der Steckaufnahmen und Steckteile ineinander gesteckt werden, im wesentlichen parallel zur Fahrzeuglängsrichtung ausgerichtet ist. Durch die parallele Ausrichtung können die Steckverbindungen besonders gut Kräfte in vertikaler Richtung (senkrecht nach oben bzw. unten zur Fahrzeuglängsachse) und in horizontaler Richtung quer zur Fahrzeuglängsachse übertragen. Dies ist besonders bei einem Seitenaufprall wichtig wenn die Schiebetüre sehr große Querkräfte aufnehmen muß. Die Steckverbindungen halten dann die Schiebetüre fest im Rahmen.

Vorzugsweise sind zwei Steckverbindungen, eine obere Steckverbindung mit oberen Steckelementen, einem oberen Steckteil und einer oberen Steckaufnahme, zur Verbindung des oberen hinteren Endbereiches und eine untere Steckverbindung mit unteren Steckelementen, einem unteren Steckteil und einer unteren Steckaufnahme, zur Verbindung des unteren hinteren Endbereiches mit dem Rahmen, vorgesehen. Dadurch kann die Schiebetüre in der Schließposition an ihrem hinteren Endbereich an zwei Höhen beabstandeten Stellen über die Steckverbindungen gehalten und damit stärker kraft- und formschlüssig fixiert werden, welches eine weitere Erhöhung der Sicherheit bei Seitenaufprall bewirken kann.

Bevorzugt ist die Schiebetür mittels der oberen Steckverbindung mit einem in Schließrichtung verlaufenden, die Türöffnung begrenzenden oberen Längsrahmen und mittels der unteren Steckverbindung mit einem in Schließrichtung verlaufenden, die Türöffnung begrenzenden unteren Längsrahmen verbindbar. Bei einem herkömmlichen Personenkraftkraftwagen wird die Türöffnung von oben her durch einen Dachrahmen und von unten her durch einen Bodenrahmen begrenzt, so daß bei dem erfindungsgemäßen Schiebetürsystem die obere Steckverbindung zu dem Dachrahmen - als oberen Längsrahmen - und die untere Steckverbindung zu dem Bodenrahmen - als unteren Längsrahmen - herstellbar sind. Durch die Schaffung einer oberen und unteren Steckverbindung kann die Verwindungssteifigkeit des Fahrzeuges bei geschlossener Schiebetür erhöht werden, da die Schiebetür jetzt zumindest teilweise die Funktion einer Karosseriesäule im Rahmen übernimmt. Zur Erhöhung der Seitenaufprallsicherheit können in oder an den Türseiten, an denen üblicherweise eine B-Säule im Rahmen angeordnet ist, Verstärkungselemente bevorzugt in Form von Profilen vorgesehen sein

Die Schiebetür kann zu ihrer verschieblichen Lagerung mittels eines an ihrem hinteren Endbereich befestigten unteren Führungsarmes in die untere hintere Führungsschiene eingreifen und eines der unteren Steckelemente kann hierbei an dem unteren Führungsarm angeordnet sein. Die untere Führungsschiene kann in einem lateral nach Außen offenen Führungskanal in einem Rahmenteil unterhalb der Schiebetür in Schließposition positioniert sein, so daß das andere zugehörige untere Steckelement geschützt und versteckt in dem Führungskanal positioniert sein kann.

In gleicher Weise kann eine Steckverbindung über einen oberen Führungsarm mit der oberen Steckaufnahme oder dem oberen Steckteil in der Schließposition der Schiebetür erstellt werden.

Um ein einfaches Ineinandergreifen der Verriegelungselemente bzw. der Steckelemente zu gewährleisten, kann das eine untere Steckelement zweckmäßigerweise an einer senkrecht zur Schließrichtung angeordneten Seitenfläche des unteren Führungsarmes angeordnet sein. Desgleichen kann das obere Steckteil oder die obere Steckaufnahme an einer in Schließrichtung weisenden Seitenfläche eines oberen Führungsarmes angeordnet sein, über den die Schiebetür in die obere hintere Schiebetüre eingreift.

Vorzugsweise sind jeweils das Steckteil an oder in dem Rahmen und die Steckaufnahme an oder in dem hinteren Endbereich der Schiebetür angeordnet. Somit ist das Steckteil als vorspringendes und damit Verletzungsgefahr bergendes Bauteil konstruktiv einfach an geschützten Stellen im oder am Längsrahmen positionierbar.

Prinzipiell kann das Steckteil einen vorstehenden Körper umfassen, der in die ihm angepaßte Steckaufnahme eingreift und mit oder ohne Spiel lateral an der Steckaufnahme anliegt. Bevorzugt weist das Steckteil einen vorzugsweise zylindrischen Steckzapfen auf, der sich in Schließrichtung erstreckt und in der Schließposition in die Steckaufnahme hineinragt. Bevorzugt liegt der Steckzapfen in der Schließposition seitlich an der Innenseitenfläche der Steckaufnahme vorzugsweise mit großem Spiel an. Zum leichteren Einführen des Steckzapfens in die Steckaufnahme kann das freie Ende des Steckzapfens sich konisch verjüngend ausgebildet sein.

Die Steckelemente können einstückig mit dem Längsrahmenrahmen und/oder der Schiebetür verbunden sein. Vorzugsweise sind Steckteil und Steckaufnahme lösbar bevorzugt über Schraubverbindungen mit dem Längsrahmen bzw. mit der Schiebetür verbunden. Die Steckaufnahme und/oder Steckteil können zur Ausbildung der oberen und/oder der unteren Steckverbindung beispielsweise als Bügel mit an Schenkelenden abgewinkelten Befestigungsenden mit Schraubenöffnungen für die Schraubverbindungen ausgebildet sein, wobei der die Schenkel verbindende Steg bei der Steckaufnahme eine Durchgangsöffnung zur Aufnahme des Steckteiles bzw. des Steckzapfens und bei dem Steckteil den Steckzapfen aufweisen. Der Steckzapfen kann im Presssitz in einer Ausnehmung in dem Steg angeordnet sein und sich zweckmäßigerweise entgegen der Richtung der Schenkel erstrecken. Ferner kann der Steckzapfen zu seiner sicheren Anordnung in der Durchgangsöffnung umfänglich angeordnete, radiale Erstreckungen, insbesondere einen Kragen, aufweisen, mit denen sich der Steckzapfen an der in Steckrichtung, in der der Steckzapfen in die Steckaufnahme eingeführt wird, hinteren Seitenfläche entgegen der Steckrichtung abstützt. Der Steckzapfen kann an der in Steckrichtung vorderen Seitenfläche eine zusätzliche Sicherung gegen ein Herausrutschen in Steckrichtung, beispielsweise in Form eines Simmerringes oder dergleichen, aufweisen. Die Steckaufnahme kann eine bevorzugt verstärkte und nach Innen gekapselte Öffnung in dem Rahmen sein. Die Steckaufnahme kann einen Einsatz zum Schutz der Durchgangsöffnung aufweisen, der bevorzugt die Tiefe der Steckaufnahme in Steckrichtung verlängert, wobei sich der Einsatz bevorzugt an der in Steckrichtung vorderen Seitenfläche der Steckaufnahme seitlich abstützt. Vorzugsweise ist die Steckaufnahme mit dem Einsatz mit einem Befestigungselement an dem Rahmen oder der Schiebetür befestigbar. Steckzapfen und/oder Einsatz können als einstückige Spritzgußteile bevorzugt aus Kunststoff hergestellt sein.

In einer bevorzugten Ausführung wird die Schiebetür durch ein Verriegelungselement in horizontaler oder vertikaler Richtung festlegt. Damit kann ein Verspannen der Schiebetür in der Karosserieöffnung verhindert werden. Indem z. B. das Verriegelungselement eine vertikale Verschiebung zulässt, können die Führungsrollen nicht in de Führungsschienen verklemmen. Bei der Verwendung von zwei Verriegelungselementen oben und unten and der Schiebetür kann ein Verriegelungselement die Schiebetür nur horizontal festlegen, während das andere Führungselement die Scheibetür horizontal und vertikal festlegt. Dann ist die Schiebetür gegenüber der Außenkontur in horizontaler Richtung festgelegt, kann also nicht aus der Fahrzeugkontur herausragen. Vertikal dagegen ist die Schiebetür gegenüber der Fahrzeugkarosserie im Rahmen nur an einem Punkt festgelegt und kann am anderen Verriegelungspunkt sich frei (vertikal) bewegen, wodurch eine Verspannung der Schiebetür zwischen den Verriegelungselementen verhindert wird.

Bevorzugte ist ein Steckteile und/oder die entsprechende Steckaufnahme zur Justierung der Schließposition der Schiebetür einstellbar ausgeführt. Dies heißt die Schließposition kann so justiert werden, daß die Schiebtür im Rahmen mittig sitzt und/oder die Schiebtür exakt mit der Außenkontur des Fahrzeugs übereinstimmt. Erreicht werden kann dies, indem eine Steckaufnahme einen gegenüber der Fahrzeugkarosserie in verschiedenen Positionen festlegbaren Einsatz aufweist. Und/oder ein Steckzapfen ist exzentrisch in einem Steckteil gelagert ist und zu Einstellungszwecken in einer bestimmten Exzenterposition festlegbar. Bei der Justierung wird der Steckzapfen solange verdreht, bis die gewünschte Position er Schiebetür erreicht ist. Sodann wird der Steckzapfen festgelegt, z. B. durch eine Gegenmutter.

Vorzugsweise sind zusammenwirkende Anschläge mit einem Anschlagskörper aus einem dämpfenden Werkstoff wie Gummi oder dergleichen vorgesehen sind, gegen die die Schiebetür in ihrer Schießposition anschlägt. Hierdurch kann die Schiebetür am Ende ihres Verfahrweges weich abgebremst werden. Ferner können die Anschläge in der Schließposition den Zusammenhalt zwischen Schiebetür und Rahmen verbessern und vibrationsdämpfend wirken. Vorzugsweise ist jeweils in der Nähe einer Steckverbindung oder in der Steckverbindung ein Anschlag vorgesehen. Es kann beispielsweise der Steckzapfen an seiner Basis von einem umfänglich angeordneten, bevorzugt flachen Gummiring umgürtet sein.

Bei der vorliegenden Erfindung kann die zweite Tür als Schwenktür - wie bereits oben im Stand der Technik beschrieben - ausgeführt sein, wobei die Reihenfolge der Anordnung der Türen in Fahrtrichtung gesehen beliebig ist. Dabei sind vorteilhaft die Scharniergelenke der Schwenktür gegenüberliegend dem gemeinsamen Türspalt von Schwenktür und Schiebetür angeordnet. Es können aber auch beide Türen als Schiebetüren ausgeführt sein. Die vordere Schiebetüre würde dann z. B. nach vorne zum Öffnen verschoben, die hintere Schiebetüre nach hinten.

Die vorliegende Erfindung wird im Folgenden anhand eines in einer Zeichnung dargestellten Ausführungsbeispieles näher erläutert. In der Zeichnung zeigen:
- Figur 1: eine perspektivische Seitenansicht auf eine Innenseite eines Schiebetürsystems mit Führungsschienen sowie unterer und oberer Steckverbindung,
- Figur 2: eine schematische Skizze zum Funktionsprinzip des Schiebetürsystems,
- Figur 3: eine perspektivische Unteransicht auf einen Schiebetürbereich mit der oberen Steckverbindung ,
- Figur 4: eine perspektivische Draufsicht auf einen unteren Schwenkarm und die untere Steckverbindung,
- Figur 5: eine perspektivische Draufsicht auf die untere Steckverbindung und
- Figur 6: eine Querschnittsansicht der unteren Steckverbindung.

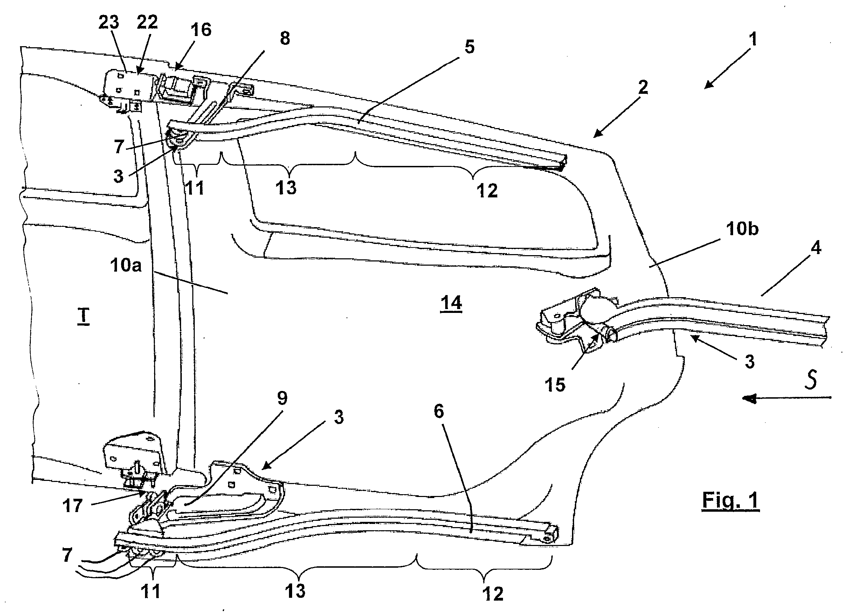

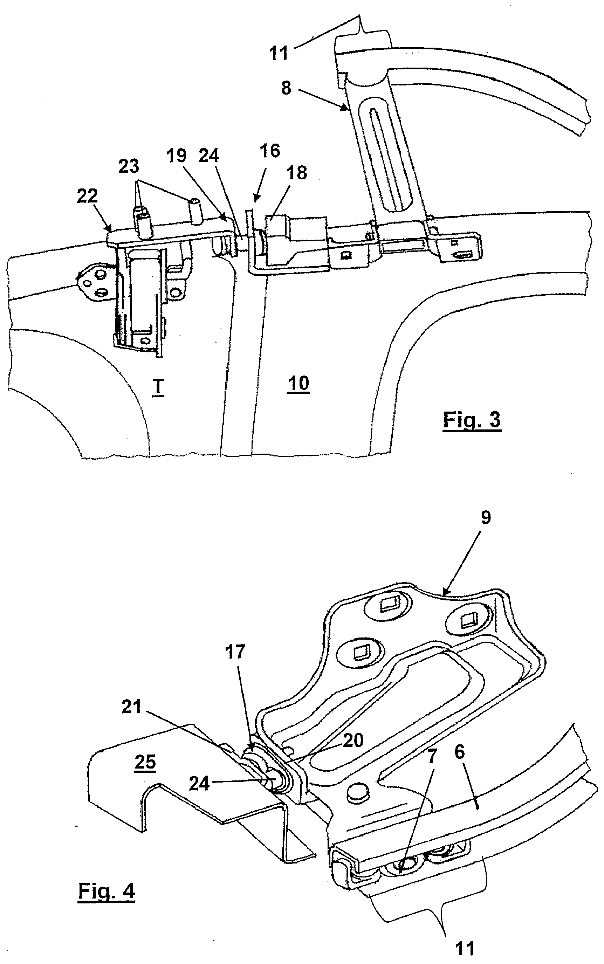

Die Figur 1 zeigt eine perspektivische Seitenansicht auf eine Innenseite eines Schiebetürsystems 1 für ein Fahrzeug, wobei das Schiebetürsystem 1 einen Rahmen für eine Fahrzeugkarosserie, eine Türöffnung in dem Rahmen und eine Schiebetür 2 aufweist, die zum Öffnen und Schließen der Türöffnung über eine Führungseinrichtung 3 mit Führungsschienen 4 - 6 längs eines relativ zur Fahrzeugkarosserie nicht linearen Weges in einer Schließrichtung s aus einer Offenposition in eine hier dargestellte Schließposition verfahrbar ist. Der Übersichtlichkeit halber sind in der Figur 1 sowie in den nachfolgenden Figuren 3 und 4 die Fahrzeugkarosserie, der Rahmen und die von dem Rahmen umschlossene Türöffnung fortgelassen bzw. durchsichtig gezeichnet dargestellt. Ferner sind der Klarheit halber in den Figuren 1, 3 und 4 Vorrichtungen zum Festlegen einer hier nur teilweise gezeigten zweiten Tür T zumindest zum Teil fortgelassen, wobei die Tür T in diesem Ausführungsbeispiel als Schwenktür ausgebildet ist. Bei einer Ausbildung als Schiebetür 2 würde die Tür T zweckmäßigerweise entgegen der Schließrichtung s zur hier dargestellten Schiebetür 2 hin geschlossen werden. Schiebetür 2 und Schwenktür T grenzen in Schließposition unmittelbar aneinander, da auf eine übliche mittlere Säule, eine so genannte B-Säule, zu Gunsten einer vergrößerten Einstiegsöffnung verzichtet wurde. Durch die fortgelassene B-Säule besteht die Gefahr, daß die Verwindungssteifigkeit der Fahrzeugkarosserie unzulässig verringert wird, welchem durch die Festlegung der Schiebetür 2 in die Steckverbindungen 16,17 die Verwindungssteifigkeit der Fahrzeugkarosserie in der Schließposition der Schiebetür entgegengewirkt wird.

Die Schiebetür 2 ist in einer in Schließrichtung s vorderen Führungsschiene 4, einer in Schließrichtung s hinteren oberen Führungsschiene 5 und in einer in Schließrichtung s hinteren unteren Führungsschiene 6 verfahrbar bzw. verschiebbar über Führungsrollen 7 gelagert. Hierzu greift ein oberer Führungsarm 8 und ein unterer Führungsarm 9 jeweils über Führungsrollen 7 in die hintere obere Führungsschiene 5 bzw. in die hintere untere Führungsschiene 6 ein, wobei die beiden Führungsarme 8, 9 an der Innenseite eines hinteren Endbereiches 10 der Schiebetür 2 befestigt sind.

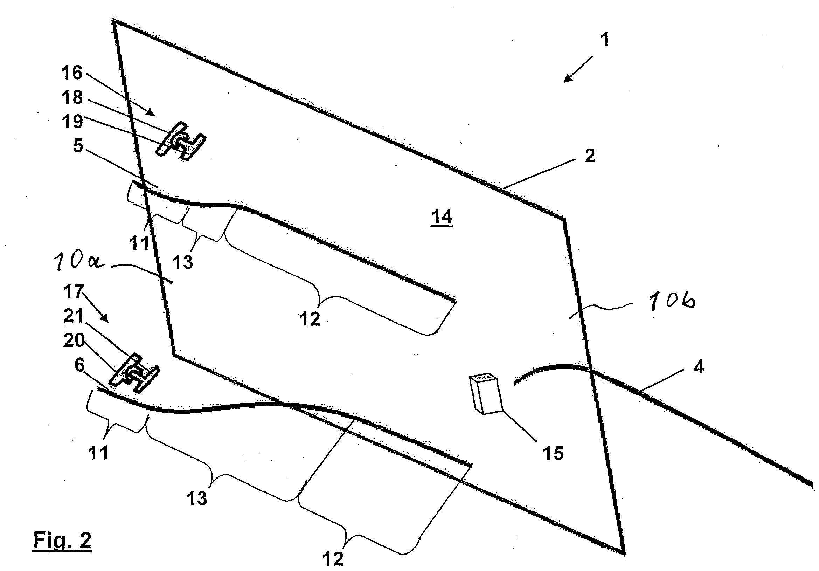

Erfindungsgemäß weisen die hinteren Führungsschienen 5, 6 einen S-förmigen Verlauf mit einem in Schließrichtung s hinteren Endabschnitt 11, einen in Schließrichtung s vorderen Endabschnitt 12 und einem als Übergang 13 ausgebildeten Mittelstück, wobei die beiden Endabschnitte 11, 12 etwa parallel zur größeren Seitenfläche 14 und parallel beabstandet zueinander angeordnet sind. Ferner ist vorgesehen, daß ein in Schließrichtung s vorderer Endbereich 10b der Schiebetür 2, mit dem die Schiebetür 2 verfahrbar in der vorderen Führungsschiene 4 gelagert ist, über einen Schließmechanismus 15 lösbar mit dem hier nicht dargestellten Rahmen festlegbar ist. Der Schließmechanismus 15 ist als üblicher Schließmechanismus ausgebildet und ist daher zur Vereinfachung der Zeichnung nicht detailliert bzw. nur ausschnittsweise dargestellt. Durch die Ausbildung des hinteren Endabschnittes 11 der beiden hinteren Führungsschienen 5, 6 und durch die Möglichkeit, den vorderen Endbereich 12 der Schiebetür 2 in der Schließposition der Schiebetür 2 in dem Rahmen festzulegen, kann die Schiebetür 2 kraftschlüssig und formschlüssig in der Schließposition fixiert werden. Dies soll im Einzelnen anhand der in Figur 2 dargestellten schematischen Skizze zum Funktionsprinzip des Schiebetürsystems 1 deutlich gemacht werden:

In der Figur 2 ist die Schiebetür 2 stark abstrahiert als einfaches Parallelogramm gezeichnet. Die einskizzierten Führungsschienen 4, 5, 6 sind lediglich in der in Figur 1 gezeigten geometrischen Anordnung zur Schiebetür 2 und ohne Verbindung zur Schiebetür 2 gezeichnet. Deutlich ist der S-förmige Verlauf der beiden hinteren Führungsschienen 5, 6 und der rundhakenförmige oder spazierstockartige Verlauf der vorderen Führungsschiene 4 der Figur 2 entnehmbar. Die Schiebetür 2 ist in Figur 2, wie in Figur 1, in Schließposition gezeigt. Hierbei wird die Schiebetür 2 in den hinteren Endabschnitt 11 der hinteren Führungsschiene 5, 6 in Schließrichtung s sowie senkrecht zur Schließrichtung s bzw. senkrecht zur größeren Seitenfläche 14 kraftschlüssig und der vordere Endabschnitt 12 durch den Schließmechanismus 15 kraft- und formschlüssig gehalten, sodaß die Schiebetür 2 in der Schließposition kraft- und formschlüssig in dem Rahmen fixiert ist. Zusätzlich sind eine obere Steckverbindung 16 und eine untere Steckverbindung 17 vorgesehen, über den der hintere Endbereich 10a der Schiebetür 2 in der Schließposition zusätzlich am Rahmen fixiert wird. Die Steckverbindungen 16, 17 weisen jeweils eine Steckaufnahme 18, 20 und ein Steckteil 19, 21 auf, die jeweils mit dem oberen bzw. unteren Längsrahmen oder der Schiebetür 2 fest verbunden sind und die in Schließrichtung s ineinander steckbar sind. Durch die beiden Steckverbindungen 16, 17 wird die Festlegung der Schiebetür 2 in ihrer Schließposition in dem Rahmen so verstärkt, daß die Schiebetür 2 auch höheren Seitenprallanforderungen genügt, da die Schiebetür 2 durch die Steckverbindung 16, 17 kraft- und formschlüssig in einer Ebene senkrecht zur Schließrichtung s festgelegt wird.

Übliche hintere Führungsschienen weisen einen Verlauf ähnlich dem der vorderen Führungsschiene 4 auf, wobei die Schiebetür auf ihrem letzten Wegstück zu ihrer Schließposition hin etwa senkrecht zu ihrer größeren Seitenfläche in die Türöffnung hinein verfahren wird und durch mehrere Schließmechanismen mit beweglichen Verriegelungselementen in dem Rahmen festgelegt wird. Durch die erfindungsgemäße Ausbildung des hinteren Endabschnittes 11 der hinteren Führungsschienen 5, 6 wird der hintere Endbereich 10a der Schiebetür wieder in Schließrichtung s geführt und kann dadurch eine Steckverbindung 16, 17 mit dem Rahmen eingehen, die senkrecht zur Schließrichtung s wirksam ist, ohne daß bewegliche Verriegelungselemente verwendet werden müssen.

Die auch in Figur 1 dargestellten Steckverbindung 16, 17, werden in den Figuren 3, 4 in einer perspektivischen Untersicht bzw. in einer perspektivischen Draufsicht vergrößert gezeigt. Das obere Steckteil 19 der oberen Steckverbindung 16 ist über ein Befestigungselement 22 mit dem hier nicht dargestellten Rahmen verbunden, wobei das Befestigungselement 22 Befestigungszapfen 23 aufweist, die in dem Rahmen verankert sind und die in der Figur 3 wegen des fortgelassenen Rahmens dort in den Raum hineinragen, wo der Rahmen angeordnet wäre. Die obere Steckaufnahme 18 ist an dem hinteren Endabschnitt 11 der Schiebetür 2 angeordnet, in die das obere Steckteil 19 entgegen der Schließrichtung s hineinragt, wobei der Steckzapfen 24 mit seitlichen Spiel in die oberen Steckaufnahme 18 hineinragt.

In Figur 4 wird in einer perspektivischen Draufsicht auf den unteren Teil des hinteren Endbereiches 10 der Schiebetür 2 die untere Steckverbindung 17 vergrößert gezeigt. Hierbei ist die untere Steckaufnahme 20 auf eine in Schließrichtung s weisende Seitenfläche des unteren Führungsarmes 9 angebracht. Der untere Führungsarm 9 ist in der Schließposition der Schiebetür 2 in einem hier nur ausschnittsweise mit einem Wandungsabschnitt 25 dargestellten Kanal verfahren. Das untere Steckteil 21 ist an dem Wandungsabschnitt 25 und damit geschützt im Kanal angeordnet.

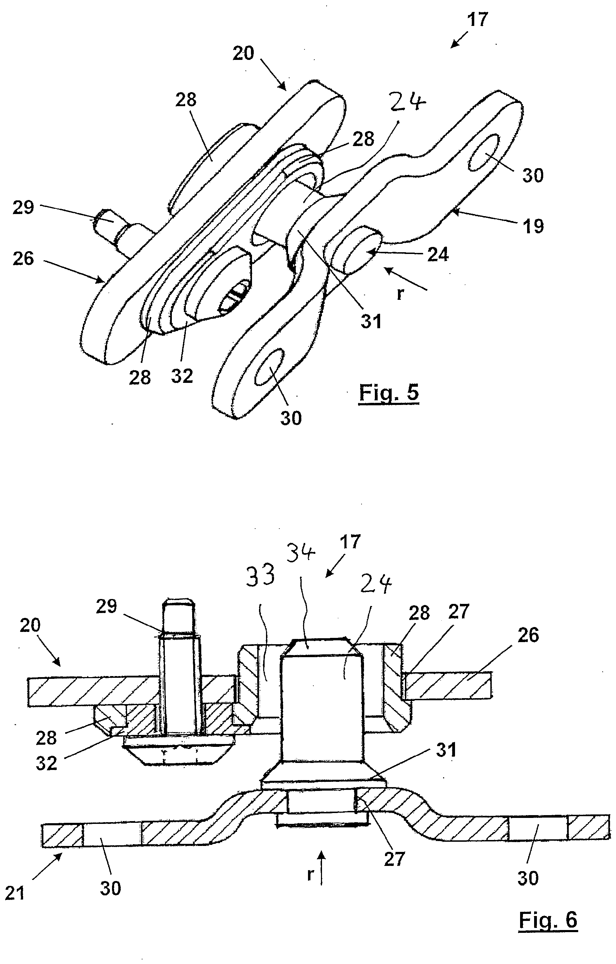

Die untere Steckverbindung 17 mit dem unteren Steckteil 21 und der unteren Steckaufnahme 20 wird in Figur 5 in einer perspektivischen Draufsicht und in Figur 6 im Querschnitt gezeigt. Die untere Steckaufnahme 20 weist eine Lasche 25 mit einer Durchgangsöffnung 27 auf, wobei in der Durchgangsöffnung 27 ein Einsatz 28 angeordnet ist, der gleichzeitig mit der Lasche 26 über ein Befestigungselement 29 mit dem unteren Führungsarm 9 befestigbar ist. Der Einsatz 28 ist mittels des exzentrischen Befestigungsschraube 29 gegenüber der Lasche 26 in verschiedenen Positionen festlegbar. Damit kann die Schließposition der Schiebetür 2 gegenüber dem Rahmen festgelegt bzw. justiert werden.

Im Einsatz 28 weist der der Steckzapfen 24 ein Spiel in horizontaler Richtung (Querschnittsebene von Figur 6) auf. Damit ist in horizontaler Richtung ein Spielausgleich zwischen Schiebetür 2 und Fahrzeugkarosserie möglich. Dagegen weist der Steckzapfen 24 gegenüber dem Einsatz 28 kein Spiel in vertikaler Richtung auf, d. h. die Schiebetür 2 wird durch den Steckzapfen 24 in vertikaler Richtung gegenüber der Fahrzeugkarosserie festgelegt. Konstruktiv erreicht wird dies, indem der Einsatz 28 ein Langloch 33 für den Zapfen 24 aufweist.

Der Steckzapfen 24 ist in der Durchgangsöffnung 27 mit dem als Bügel ausgebildeten unteren Steckteiles 21 vernietet. Es ist jedoch auch möglich, statt dessen eine Schraubbefestigung vorzusehen. Insbesondere wenn der Steckzapfen exzentrisch in der Durchgangsöffnung gelagert ist, lässt sich dann eine horizontale und vertikale Justierung der Schließposition der Schiebetür 2 vornehmen, indem der Steckzapfen 24 in einer bestimmten Winkellage festgelegt wird. Das untere Steckteil 21 ist in diesem Ausführungsbeispiel über endseitige Schraubenöffnungen 30 am Wandungsabschnitt 25 des hier nicht weiter dargestellten Kanals im Rahmens befestigt.

Zur Herstellung der unteren Steckverbindung 17 fährt beim Schließen der Schiebetür 2 die untere Steckaufnahme 20 über den Steckzapfen 24 in Steckrichtung r, so daß der Steckzapfen 24 im Langloch 33 in Schließposition ruht. Die Phase 34 dient der leichteren Einführung des Steckzapfens 24 in das Langloch 33.

Selbstverständlich ist die Erfindung nicht auf dies gezeigten Ausführungsbeispiele beschränkt. Insbesondere die Steckverbindungen können beliebig anders ausgestaltet werden, solange sie dadurch entstehen, daß bei Schließvorgang der Schiebetür kurz vor Erreichen der Schließposition diese Steckverbindung zwischen Rahmen und Schiebetür zustande kommt.

### Bezugszeichenliste

- 1: Schiebetürsystem
- 2: Schiebetür
- 3: Führungseinrichtung
- 4: vordere Führungsschiene
- 5: hintere obere Führungsschiene
- 6: hintere untere Führungsschiene
- 7: Führungsrolle
- 8: oberer Führungsarm
- 9: unterer Führungsarm
- 10a: hinterer Endbereich
- 10b: vorderer Endbereich
- 11: hinterer Endabschnitt
- 12: vorderer Endabschnitt
- 13: Übergang
- 14: größere Seitenfläche
- 15: Schließmechanismus
- 16: obere Steckverbindung
- 17: untere Steckverbindung
- 18: oberer Steckaufnahme
- 19: oberes Steckteil
- 20: untere Steckaufnahme
- 21: unteres Steckteil
- 22: Befestigungselement
- 23: Befestigungszapfen
- 24: Steckzapfen
- 25: Wandungsabschnitt
- 26: Lasche
- 27: Durchgangsöffnung
- 28: Einsatz
- 29: Befestigungselement
- 30: Schraubenöffnung
- 31: Kragen
- 32: Hülse
- 33: Langloch
- 34: Phase

- r: Steckrichtung
- s: Schließrichtung

## Patentansprüche

1. Schiebetürsystem (1) für ein Kraftfahrzeug, umfassend einen Rahmen um eine Türöffnung in einer Seitenwand des Kraftfahrzeuges, wobei der Rahmen zwei überwiegend horizontal verlaufende Längsrahmen, einen oberen und einen unteren, aufweist, sowie eine Schiebetür (2) und eine zweite Tür (T) zum Verschließen der Türöffnung, wobei zwischen Schiebetür (2) und Tür (T) keine Karosseriesäule angeordnet ist, und wobei die Schiebetür (2) zum Öffnen und Schließen der Türöffnung über eine Führungseinrichtung (3) mit Führungsschienen (5,6,7) längs eines relativ zur Fahrzeugkarosserie nicht-linearen Weges in einer Schließrichtung (s) aus einer Offenposition in eine Schließposition verfahrbar ist und die in der Schließposition mittels einer Schließvorrichtung festlegbar ist, wobei die Schließvorrichtung einen Schließmechanismus (15) umfasst, durch den ein in Schließrichtung (s) vorderer Endbereich (10b) der Schiebetür (2) lösbar mit zumindest einem Längsrahmen festlegbar ist, und eine Verriegelungsvorrichtung zur Festlegung des hinteren Endbereiches (10a) der Schiebetür (2) aufweist, wobei die Verriegelungsvorrichtung ausschließlich feststehende Verriegelungselemente umfasst, die als in Schließrichtung (s) ineinander steckbare Steckelemente für eine Steckverbindung (16, 17) mit Steckaufnahme (18, 20) und Steckteil (19, 21) ausgebildet sind,
**dadurch gekennzeichnet,**
**dass** eine in Schließrichtung (s) hintere Führungsschiene (6, 7), in der die Schiebetür (2) mit einem in Schließrichtung (s) hinteren Endbereich (10a) verschiebbar gelagert ist, einen S-förmigen Verlauf mit einem in Schließrichtung (s) hinteren Endabschnitt (11) aufweist, der etwa parallel zur größeren Seitenfläche der Schiebetür (2) in der Schließposition angeordnet ist, dass ein Steckteil (19, 21) und/oder die entsprechende Steckaufnahme (18, 20) zur Justierung der Schließposition der Schiebetür (2) einstellbar sind, indem die Steckaufnahme (18, 20) eine gegenüber der Fahrzeugkarosserie in verschiedenen Positionen festlegbaren Einsatz (28) aufweist und/oder indem der Steckzapfen (24) exzentrisch in einem Steckteil (19, 21) gelagert ist und zu Einstellungszwecken in einer bestimmten Exzenterposition festlegbar ist.

2. Schiebetürsystem (1) nach Anspruch 1,
**dadurch gekennzeichnet,**
**dass** zwei hintere Führungsschienen (5,6) vorgesehen sind, die sich längs der Schließrichtung (s) erstrecken und von denen eine als hintere obere Führungsschiene (5) oberhalb der Türöffnung in oder an dem oberen Längsrahmen und eine als hintere untere Führungsschiene (6) unterhalb der Türöffnung in oder an dem unteren Längsrahmen angeordnet ist.

3. Schiebetürsystem (1) nach Anspruch 1 oder 2,
**dadurch gekennzeichnet,**
**dass** eine Verriegelungsvorrichtung die Schiebetür (2) in horizontaler Richtung festlegt.

4. Schiebetürsystem (1) nach einem der vorherigen Ansprüche,
**dadurch gekennzeichnet,**
**dass** eine Verriegelungsvorrichtung die Schiebetür (2) in vertikaler Richtung festlegt.

5. Schiebetürsystem (1) nach der vorherigen Ansprüche,
**dadurch gekennzeichnet,**
**dass** die Steckrichtung, mit der Steckaufnahmen (18, 20) und Steckteile (19 21) ineinander gesteckt werden, im Wesentlichen parallel zur Fahrzeuglängsrichtung ausgerichtet sind.

6. Schiebetürsystem (1) nach der vorherigen Ansprüche,
**dadurch gekennzeichnet,**
**dass** eine obere Steckverbindung (16) mit oberen Steckelementen, einem oberen Steckteil und einer oberen Steckaufnahme, zur Verbindung des oberen hinteren Endbereiches mit dem oberen und eine untere Steckverbindung (17) mit unteren Steckelementen, einem unteren Steckteil und einer unteren Steckaufnahme, zur Verbindung des unteren hinteren Endbereiches (10a) mit dem unteren Längsrahmen vorgesehen sind.

7. Schiebetürsystem (1) nach einem der vorherigen Ansprüche,
**dadurch gekennzeichnet,**
**dass** die Schiebetür (2) zu ihrer verschieblichen Lagerung mittels eines an ihrem hinteren Endbereich (10a) befestigten unteren Führungsarmes (9) in die untere hintere Führungsschiene (6) eingreift und dass eines der unteren Steckelemente an dem unteren Führungsarm (9) angeordnet ist.

8. Schiebetürsystem (1) nach Anspruch 7,
**dadurch gekennzeichnet,**
**dass** das eine untere Steckelement an einer senkrecht zur Schließrichtung (s) angeordneten Seitenfläche des unteren Führungsarmes (9) angeordnet ist.

9. Schiebetürsystem (1) nach einem der vorherigen Ansprüche,
**dadurch gekennzeichnet,**
**dass** das Steckteil (19, 21) an oder in dem Längsrahmen und die Steckaufnahme (18, 20) an oder in dem hinteren Endbereich der Schiebetür (2) angeordnet sind.

10. Schiebetürsystem (1) nach einem der vorherigen Ansprüche,
**dadurch gekennzeichnet,**
**dass** das Steckteil (19, 21) einen Steckzapfen (24) aufweist, der sich in Schließrichtung (s) erstreckt und der in der Schließposition in die Steckaufnahme (18, 20) hineinragt.

11. Schiebetürsystem (1) nach einem der vorherigen Ansprüche,
**dadurch gekennzeichnet,**
**dass** das Steckteil 19, 21) und/oder Steckaufnahme (18, 20) lösbar mit dem Längsrahmen bzw. mit der Schiebetür (2) verbunden sind.

12. Schiebetürsystem (1) nach einem der vorherigen Ansprüche,
**dadurch gekennzeichnet,**
**dass** zusammenwirkende Anschläge mit einem Anschlagskörper aus einem Stoß dämpfenden Werkstoff wie Gummi vorgesehen sind, gegen die die Schiebetür (2) in ihrer Schließposition anschlägt.

13. Schiebetürsystem (1) nach Anspruch 12,
**dadurch gekennzeichnet,**
**dass** in der Nähe einer Steckverbindung (16, 17) ein Anschlag vorgesehen ist.

14. Schiebetürsystem (1) nach einem der vorherigen Ansprüche,
**dadurch gekennzeichnet,**
**dass** die zweite Tür (T) auch als Schiebetür ausgeführt ist.

15. Schiebetürsystem (1) nach einem der Ansprüche 1 bis 13,
**dadurch gekennzeichnet,**
**dass** die zweite Tür (T) als Schwenktür ausgeführt ist.

## Claims

1. Sliding door system (1) for a motor vehicle, comprising a frame around a door opening in a side wall of the motor vehicle, the frame having two predominantly horizontally running longitudinal frames, an upper and a lower, and a sliding door (2) and a second door (T) for closing the door opening, no vehicle body pillar being arranged between the sliding door (2) and the door (T), and it being possible, in order to open and close the door opening, for the sliding door (2) to be moved in a closing direction (s) out of an open position and into a closed position via a guide device (3) with guide rails (5, 6, 7) along a non-linear path relative to the vehicle body, and it being possible for the said sliding door (2) to be fixed in the closed position by means of a closing apparatus, the closing apparatus comprising a closing mechanism (15), by way of which a front end region (10b) of the sliding door (2) in the closing direction (s) can be fixed releasably to at least one longitudinal frame, and the said closing apparatus having a locking apparatus for fixing the rear end region (10a) of the sliding door (2), the locking apparatus comprising exclusively stationary locking elements which are configured as plug-in elements which can be plugged into one another in the closing direction (s) for a plug-in connection (16, 17) with a plug-in receptacle (18, 20) and a plug-in part (19, 21), **characterized in that** a rear guide rail (6, 7) in the closing direction (s), in which guide rail (6, 7) the sliding door (2) is mounted displaceably by way of a rear end region (10a) in the closing direction (s), has an S-shaped profile with a rear end section (11) in the closing direction (s), which end section (11) is arranged approximately parallel to the larger side area of the sliding door (2) in the closed position, **in that** a plug-in part (19, 21) and/or the corresponding plug-in receptacle (18, 20) can be set in order to adjust the closed position of the sliding door (2), by the plug-in receptacle (18, 20) having an insert (28) which can be fixed in different positions with respect to the vehicle body, and/or by the plug-in pin (24) being mounted eccentrically in a plug-in part (19, 21) and being capable of being fixed in a defined eccentric position for setting purposes.

2. Sliding door system (1) according to Claim 1, **characterized in that** two rear guide rails (5, 6) are provided which extend along the closing direction (s) and of which one is arranged as a rear upper guide rail (5) above the door opening in or on the upper longitudinal frame and one is arranged as a rear lower guide rail (6) below the door opening in or on the lower longitudinal frame.

3. Sliding door system (1) according to Claim 1 or 2, **characterized in that** a locking apparatus fixes the sliding door (2) in the horizontal direction.

4. Sliding door system (1) according to one of the preceding claims, **characterized in that** a locking apparatus fixes the sliding door (2) in the vertical direction.

5. Sliding door system (1) according to the preceding claims, **characterized in that** the plug-in direction, by way of which plug-in receptacles (18, 20) and plug-in parts (19, 21) are plugged into one another, is oriented substantially parallel to the vehicle longitudinal direction.

6. Sliding door system (1) according to the preceding claims, **characterized in that** an upper plug-in connection (16) is provided with upper plug-in elements, an upper plug-in part and an upper plug-in receptacle, for connecting the upper rear end region to the upper longitudinal frame, and a lower plug-in connection (17) is provided with lower plug-in elements, a lower plug-in part and a lower plug-in receptacle, for connecting the lower rear end region (10a) to the lower longitudinal frame.

7. Sliding door system (1) according to one of the preceding claims, **characterized in that**, in order to be mounted displaceably, the sliding door (2) engages into the lower rear guide rail (6) by means of a lower guide arm (9) which is fastened to its rear end region (10a), and **in that** one of the lower plug-in elements is arranged on the lower guide arm (9).

8. Sliding door system (1) according to Claim 7, **characterized in that** the one lower plug-in element is arranged on a side face of the lower guide arm (9), which side face is arranged perpendicularly with respect to the closing direction (s).

9. Sliding door system (1) according to one of the preceding claims, **characterized in that** the plug-in part (19, 21) is arranged on or in the longitudinal frame, and the plug-in receptacle (18, 20) is arranged on or in the rear end region of the sliding door (2).

10. Sliding door system (1) according to one of the preceding claims, **characterized in that** the plug-in part (19, 21) has a plug-in pin (24) which extends in the closing direction (s) and protrudes into the plug-in receptacle (18, 20) in the closed position.

11. Sliding door system (1) according to one of the preceding claims, **characterized in that** the plug-in part (19, 21) and/or plug-in receptacle (18, 20) are/is connected releasably to the longitudinal frame or to the sliding door (2).

12. Sliding door system (1) according to one of the preceding claims, **characterized in that** interacting stops are provided with a stop body made from an impact-damping material such as rubber, with which stops the sliding door (2) comes into contact in its closed position.

13. Sliding door system (1) according to Claim 12, **characterized in that** a stop is provided in the vicinity of a plug-in connection (16, 17).

14. Sliding door system (1) according to one of the preceding claims, **characterized in that** the second door (T) is also configured as a sliding door.

15. Sliding door system (1) according to one of Claims 1 to 13, **characterized in that** the second door (T) is configured as a hinged door.

## Revendications

1. Système de porte coulissante (1) pour un véhicule automobile, comprenant un cadre autour d'une ouverture de porte dans une paroi latérale du véhicule automobile, dans lequel le cadre présente deux cadres longitudinaux s'étendant principalement en direction horizontale, un supérieur et un inférieur, ainsi qu'une porte coulissante (2) et une deuxième porte (T) pour fermer l'ouverture de porte, dans lequel aucune colonne de carrosserie n'est disposée entre la porte coulissante (2) et la porte (T), et dans lequel la porte coulissante (2) est déplaçable, pour ouvrir et fermer l'ouverture de porte, dans une direction de fermeture (s) d'une position ouverte à une position fermée au moyen d'un dispositif de guidage (3) avec des rails de guidage (5, 6, 7) le long d'un chemin non linéaire par rapport à la carrosserie du véhicule et elle peut être immobilisée dans la position fermée au moyen d'un dispositif de fermeture, dans lequel le dispositif de fermeture comprend un mécanisme de fermeture (15) par lequel une région d'extrémité avant (10b), dans la direction de fermeture (s), de la porte coulissante (2) peut être immobilisée de façon séparable avec au moins un cadre longitudinal, et présente un dispositif de verrouillage pour l'immobilisation de la région d'extrémité arrière (10a) de la porte coulissante (2), dans lequel le dispositif de verrouillage comprend exclusivement des éléments de verrouillage fixes, qui se présentent sous la forme d'éléments à broche pouvant s'engager l'un dans l'autre dans la direction de fermeture (s) pour une connexion (16, 17) avec un connecteur femelle (18, 20) et un connecteur mâle (19, 21),
**caractérisé en ce qu'**un rail de guidage arrière (6, 7) dans la direction de fermeture (s), dans lequel la porte coulissante (2) est montée de façon coulissante avec une région d'extrémité arrière (10a) dans la direction de fermeture (s), présente un tracé en forme de S avec une partie d'extrémité arrière (11) dans la direction de fermeture (s), qui est disposé sensiblement parallèlement à la plus grande face latérale de la porte coulissante (2) dans la position fermée, **en ce qu'**un connecteur mâle (19, 21) et/ou le connecteur femelle correspondant (18, 20) sont réglables pour l'ajustement de la position fermée de la porte coulissante (2), par le fait que le connecteur femelle (18, 20) présente un insert (28) pouvant être immobilisé dans différentes positions par rapport à la carrosserie de véhicule et/ou par le fait que le pivot d'emboîtement (24) est monté de façon excentrique dans un connecteur mâle (19, 21) et peut être immobilisé dans une position excentrique déterminée pour le réglage.

2. Système de porte coulissante (1) selon la revendication 1, **caractérisé en ce qu'**il est prévu deux rails de guidage arrière (5, 6), qui s'étendent le long de la direction de fermeture (s) et dont un est disposé en tant que rail de guidage arrière supérieur (5) au-dessus de l'ouverture de porte dans ou sur le cadre longitudinal supérieur et un est disposé en tant que rail de guidage arrière inférieur (6) en dessous de l'ouverture de porte dans ou sur le cadre longitudinal inférieur.

3. Système de porte coulissante (1) selon la revendication 1 ou 2, **caractérisé en ce qu'**un dispositif de verrouillage immobilise la porte coulissante (2) en direction horizontale.

4. Système de porte coulissante (1) selon l'une quelconque des revendications précédentes, **caractérisé en ce qu'**un dispositif de verrouillage immobilise la porte coulissante (2) en direction verticale.

5. Système de porte coulissante (1) selon des revendications précédentes, **caractérisé en ce que** la direction de connexion, dans laquelle le connecteur femelle (18, 20) et le connecteur mâle (19, 21) sont engagés l'un dans l'autre, est orientée essentiellement parallèlement à la direction longitudinale du véhicule.

6. Système de porte coulissante (1) selon des revendications précédentes, **caractérisé en ce qu'**il est prévu une connexion supérieure (16) avec des éléments de connexion supérieurs, un connecteur mâle supérieur et un connecteur femelle supérieur, pour la liaison de la région d'extrémité arrière supérieure avec le cadre longitudinal supérieur et une connexion inférieure (17) avec des éléments de connexion inférieurs, un connecteur mâle inférieur et un connecteur femelle inférieur, pour la liaison de la région d'extrémité arrière inférieure (10a) avec le cadre longitudinal inférieur.

7. Système de porte coulissante (1) selon l'une quelconque des revendications précédentes, **caractérisé en ce que** la porte coulissante (2) s'engage, pour son appui coulissant, dans le rail de guidage arrière inférieur (6) au moyen d'un bras de guidage inférieur (9) fixé à sa région d'extrémité arrière inférieure (10a) et **en ce qu'**un des éléments de connexion est disposé sur le bras de guidage inférieur (9).

8. Système de porte coulissante (1) selon la revendication 7, **caractérisé en ce que** ledit un élément de connexion inférieur est disposé sur une face latérale du bras de guidage inférieur (9) disposée perpendiculairement à la direction de fermeture (s).

9. Système de porte coulissante (1) selon l'une quelconque des revendications précédentes, **caractérisé en ce que** le connecteur mâle (19, 21) est disposé sur ou dans le cadre longitudinal et le connecteur femelle (18, 20) est disposé sur ou dans la région d'extrémité arrière de la porte coulissante (2).

10. Système de porte coulissante (1) selon l'une quelconque des revendications précédentes, **caractérisé en ce que** le connecteur mâle (19, 21) présente un pivot d'emboîtement (24), qui s'étend dans la direction de fermeture (s) et qui dans la position fermée pénètre dans le connecteur femelle (18, 20).

11. Système de porte coulissante (1) selon l'une quelconque des revendications précédentes, **caractérisé en ce que** le connecteur mâle (19, 21) et/ou le connecteur femelle (18, 20) sont assemblés de façon amovible au cadre longitudinal ou à la porte coulissante (2).

12. Système de porte coulissante (1) selon l'une quelconque des revendications précédentes, **caractérisé en ce qu'**il est prévu des butées coopérantes avec un corps de butée en un matériau amortissant les chocs comme le caoutchouc, contre lesquelles la porte coulissante (2) bute dans sa position fermée.

13. Système de porte coulissante (1) selon la revendication 12, **caractérisé en ce qu'**il est prévu une butée à proximité d'une connexion (16, 17).

14. Système de porte coulissante (1) selon l'une quelconque des revendications précédentes, **caractérisé en ce que** la deuxième porte (T) est également réalisée sous forme de porte coulissante.

15. Système de porte coulissante (1) selon l'une quelconque des revendications 1 à 13, **caractérisé en ce que** la deuxième porte (T) est réalisée sous forme de porte pivotante.
